# EUROPEAN PATENT SPECIFICATION

(11) **EP 1 266 944 B1**
(45) Date of publication and mention of the grant of the patent: **13.09.2006**
(21) Application number: 00979999.0
(22) Date of filing: 08.12.2000
(51) Int. Cl.: C09D 11/02, G01N 31/22, G01N 21/78, C09D 11/00

(54) **INK COMPOSITION FOR DETECTING CARBON DIOXIDE AND CARBON DIOXIDE INDICATOR USING THE SAME, AND PACKAGE HAVING CARBON DIOXIDE INDICATOR THEREIN**
TINTENZUSAMMENSETZUNG ZUM DETEKTIEREN VON KOHLENDIOXID, KOHLENDIOXIDDETEKTOR MIT EINER SOLCHEN ZUSAMMENSETZUNG SOWIE DEN KOHLENDIOXIDDETEKTOR ENTHALTENDE VERPACKUNG
COMPOSITION D'ENCRE DETECTANT LE CO 2?, INDICATEUR DE CO 2? L'UTILISANT ET APPAREIL COMPORTANT LEDIT INDICATEUR

(30) Priority: 15.12.1999 JP 35591599
(43) Date of publication of application: 18.12.2002
(73) Proprietor: Toppan Printing Co., Ltd., Taito-ku, Tokyo 110-0016 (JP); OTSUKA PHARMACEUTICAL FACTORY, INC., Naruto-shi, Tokushima 772-8601 (JP)
(72) Inventor: OCHIAI, Shinya, c/o Toppan Printing Co., Ltd., Taito-ku, Tokyo 110-0016 (JP); OBINATA, Noe, c/o Toppan Printing Co., Ltd., Taito-ku, Tokyo 110-0016 (JP); MIZUMA, Hiroyuki, c/o Toppan Printing Co., Ltd., Taito-ku, Tokyo 110-0016 (JP); OKA, Minoru, Kitajima-cho, Itano-gun, Tokushima 771-0 (JP); HONDA, Hiroshi, Tokushima-shi, Tokushima 770-0024 (JP); HAMAZAKI, Shin, 402, Spacedo-Kawauchi, Tokushima-shi, Tokushima 771-01 (JP)
(74) Representative: TBK-Patent
(86) International application number: PCT/JP2000/008692
(87) International publication number: WO 2001/044385

(56) References cited:
- EP-A2- 0 283 116
- JP-A- 11 174 039
- JP-A- 62 280 886

## Description

### Technical Field

The present invention relates to an ink composition for sensing that a replaced gas ambient in a gas-replaced package for storing foods, drinks, or chemicals for long time periods is held, a carbon dioxide indicator using the ink composition, and a package using the carbon dioxide indicator.

### Background Art

Gas-replaced packaging is a general method of storing contents such as foods, drinks, or chemicals for long time periods. This gas-replaced packaging often uses a gas mixture of nitrogen and carbon dioxide as a replacement gas and packages the contents with a packaging material having superior gas barrier properties.

The contents can be stored for long periods of time by gas-replaced packaging which uses a packaging material having superior gas barrier properties. However, if a pinhole forms or poor seal occurs owing to a defect of the packaging material itself, to a charging failure of the contents, or to a shock during the course of transportation such as distribution, the ambient packaged by gas replacement changes, and this may cause the contents to rot or change in quality. Also, the package may be distributed while this change in the ambient packaged by gas replacement is kept unnoticed.

As described above, even when gas-replaced packaging is performed using a packaging material having superior gas barrier properties, no means can find pinholes and poor seal. Therefore, it is impossible to check whether the contents are reliably stored in the gas-replaced packaging ambient.

As a means for checking whether the gas-replaced packaging ambient is maintained, a method of sensing the carbon dioxide concentration in the replacement gas is possible.

To sense the concentration of carbon dioxide gas, a carbon dioxide indicator manufactured by impregnating filter paper with a pH indicator, alkali, and solvent is disclosed, as described in, e.g., Jpn. Pat. Appln. KOKAI Publication No. 64-69951. However, this carbon dioxide indicator cannot be stable for long time periods.

International Patent Laid-Open No. 5-506088 has disclosed a medical carbon dioxide monitor formed into a film by using a pH indicator, quaternary cation as alkali, polymer, and plasticizer. Unfortunately, the formation of the indicator portion of this monitor is too time-consuming to use the monitor for a packaged product.

The present invention has been made in consideration of the above situation, and has as its object to provide an ink composition for sensing carbon dioxide gas, which is used to form a carbon dioxide indicating portion capable of easily checking changes in a gas ambient caused by a pinhole or poor seal of a gas-replaced package sealing a replacement gas containing carbon dioxide gas.

It is another object of the present invention to provide a carbon dioxide indicator capable of easily checking changes in a gas ambient caused by a pinhole or poor seal of a gas-replaced package sealing a replacement gas containing carbon dioxide gas.

It is still another object of the present invention to provide a container for storing contents such as foods, drinks, or chemicals, or a package obtained by storing this container in an outer package made of a gas barrier material, by which the sealed state of a gas containing carbon dioxide gas in this container or outer package can be checked.

### Disclosure of Invention

First, the present invention provides an ink composition for sensing carbon dioxide gas, which contains a pH indicator changing its color as pH changes, binder, and solvent.

Second, the present invention provides an ink composition for sensing carbon dioxide gas, which contains a pH indicator changing its color as pH changes, binder, water absorbent, and solvent.

Third, the present invention provides an ink composition for sensing carbon dioxide gas, which contains a pH indicator changing its color as pH changes, alkaline substance, binder, and solvent.

Fourth, the present invention provides an ink composition for sensing carbon dioxide gas, which contains a pH indicator changing its color as pH changes, alkaline substance, binder, water absorbent, and solvent.

Fifth, the present invention provides a carbon dioxide indicator comprising a support and an indicating portion formed on this support by using an ink composition for sensing carbon dioxide gas, which contains a pH indicator, binder, and solvent, or an ink composition for sensing carbon dioxide gas, which contains an alkaline substance in addition to the former ink composition.

Sixth, the present invention provides a package sealing a carbon-dioxide-containing gas in a container for storing contents such as foods, drinks, or chemicals or in an outer package storing this container and made of a gas barrier material, wherein a carbon dioxide indicator is placed in the container or the outer package.

### Brief Description of Drawings

FIG. 1 is a front view showing the first example of a carbon dioxide indicator of the present invention;
FIG. 2 is a sectional view of FIG. 1;
FIG. 3 is a sectional view showing the structure of the second example of the carbon dioxide indicator of the present invention;
FIG. 4 is a sectional view showing the structure of the third example of the carbon dioxide indicator of the present invention;
FIG. 5 is a sectional view showing the structure of the fourth example of the carbon dioxide indicator of the present invention;
FIG. 6 is a view showing the first example of a gas-replaced package according to the present invention;
FIG. 7 is a view showing the second example of the gas-replaced package according to the present invention;
FIG. 8 is a view showing the third example of the gas-replaced package according to the present invention;
FIG. 9 is a view showing an example of the structure of a carbon dioxide indicator usable in the third example of the gas-replaced package according to the present invention; and
FIG. 10 is a sectional view showing an example in which the carbon dioxide indicator according to the present invention is applied to an outer package of the package of the fourth example.

### Best Mode for Carrying Out of the Invention

An ink composition for sensing carbon dioxide gas according to the present invention contains a pH indicator changing its color as pH changes, binder, and solvent, and can further contain an alkaline substance.

Carbon dioxide gas dissolves in water to exhibit weak acidity. When a large amount of carbon dioxide gas is present in the ambient atmosphere, the pH of the ink composition of the present invention lowers. As the carbon dioxide concentration lowers, the pH value rises, and the color of the pH indicator changes accordingly. By observing this color change, a change in the carbon dioxide concentration in the ambient atmosphere can be sensed. When the ink composition contains an alkaline substance, the color change can be sensed more clearly.

In the present invention, an indicating portion is formed by using this ink composition in a gas-replaced package sealing a replacement gas containing carbon dioxide gas. Accordingly, it is possible to check a change in the carbon dioxide concentration in the replaced gas ambient by the color of the indicating portion, thereby easily finding a pinhole and poor seal of the package.

A carbon dioxide indicator of the present invention comprises a support and an indicating portion formed on this support. This indicating portion is formed using the above-mentioned ink composition for sensing carbon dioxide gas.

When this indicator is formed in a gas-replaced package sealing a replacement gas containing carbon dioxide gas, a change in the carbon dioxide concentration in the replaced gas ambient can be checked by the color of the indicating portion if the package communicates with the atmosphere and the carbon dioxide gas leaks. Accordingly, a pinhole and poor seal of the package or opening and the presence/absence of damage and the like of the package caused by mischief, transportation, or storage can be readily found if the indicator changes to a color when no carbon dioxide gas is present.

Any pH indicator can be used provided that the indicator changes its color under the influence of carbon dioxide gas or changes its color with respect to pH fluctuations corresponding to changes in the concentration of an alkaline substance.

Preferred pH indicators and their coloration ranges are presented in Table 1 below.

**Table 1**

| pH indicator | Color change | | |
|---|---|---|---|
| Bromocresol Green | Yellow | 3.8-5.4 | Blue |
| Methyl Red | Red | 4.2-6.3 | Yellow |
| Chlorophenol Red | Yellow | 5.0-6.6 | Red |
| Bromocresol Purple | Yellow | 5.2-6.8 | Purple |
| Bromothymol Blue | Yellow | 6.0-7.6 | Blue |
| Neutral Red | Red | 6.8-8.0 | Yellow |
| Phenol Red | Yellow | 6.8-8.4 | Red |
| Cresol Red | Yellow | 7.2-8.8 | Red |
| α-Naphtholphthalein | Pink | 7.3-8.7 | Green |
| Curcumin | Yellow | 7.4-8.6 | Reddish brown |
| Metacresol Purple | Yellow | 7.4-9.0 | Bluish purple |
| Ethylbis (2,4dinitrophenyl) acetate | Colorless | 7.5-9.1 | Blue |
| Thymol Blue | Yellow | 8.0-9.6 | Blue |
| p-Xylenol Blue | Colorless | 8.0-9.6 | Blue |
| Phenolphthalein | Colorless | 8.3-10.0 | Red |

A particularly preferred pH indicator is metacresol purple because it is easy to handle and its color reaction change can be easily seen.

The alkaline substance used in the present invention preferably consists of alkali hydroxide, alkali carbonate, or alkali bicarbonate.

The solvent is desirably able to uniformly and stably dissolve or disperse each component of the ink composition of the present invention. Examples are aromatic hydrocarbon, aliphatic hydrocarbon, esters, alcohols, and water. The solvent is particularly preferably at least one of water and alcohol.

The binder is used to fix a pH indicator, alkaline substance, and water-absorbing powder onto a support. Examples of this binder are polyacrylic acid, polyvinyl alcohol, polyvinylbutyral, polyvinylacetal, vinyl polyacetate, polyurethane, and a vinyl acetate partial saponified product.

As a binder, a material which dissolves or disperses in a solvent can also be selected. When water or alcohol is used as a solvent, for example, it is favorable to use a material which dissolves or disperses in at least one of water and alcohol.

The ink composition for sensing carbon dioxide gas of the present invention can further contain a water-absorbing agent.

By blending this water-absorbing agent in the ink composition, it is possible to retain a solvent such as water in an ink layer serving as an indicating portion. This can facilitate absorption of carbon dioxide gas and promote the color reaction of the pH indicator.

As this water-absorbing agent, it is possible to desirably use a substance which does not exhibit any extreme acidity or basicity when containing a solvent such as water, and which has a high degree of whiteness. As this substance, it is possible to use, e.g., starch, kaoline, synthetic silica, glass, fine-crystal cellulose, ion-exchanged cellulose, and aluminum silicate.

The ink composition for sensing carbon dioxide gas of the present invention preferably contains glycerin. This glycerin functions as a humectant. Glycerin can retain a solvent such as water in an ink layer serving as an indicating portion, thereby allowing easy absorption of carbon dioxide gas and encouraging the color reaction of the pH indicator.

Each pH indicator listed in Table 1 allows determination not only by a change in the color of the indicator itself but also by a change in the color of a color mixture with a dye having another color.

For this purpose, a coloring agent can be added to the ink composition for sensing carbon dioxide gas of the present invention.

When a change in the color of an indicator is visually hard to determine or the color is undesirable from a design viewpoint, this color can be changed to a color which allows easy visual determination or a color desirable from a viewpoint of design, by adding a coloring agent and mixing its color with the color of the ink composition for sensing carbon dioxide gas.

For a similar purpose, it is possible to use a colored support except for a white one and form an indicating portion using the ink composition for sensing carbon dioxide gas of the present invention.

Examples of the coloring agent are red coloring agents such as Food Red No. 2 (Amaranth), Food Red No. 3 (Erythrosine), Food Red No. 40 (Alura red AC), Food Red No. 102 (New Coccine), Food Red No. 104 (Phloxine), Food Red No. 106 (Acid Red), and a natural cochineal dye, yellow coloring agents such as Food Yellow No. 4 (Tartrazine), Food Yellow No. 5 (Sunset Yellow FCF), and a natural safflower-yellow dye, and blur coloring agents such as Food Blue No. 1 (Brilliant Blue FCF) and Food Blue No. 2 (Indigo Carmine).

Color changes similar to those obtained when coloring agents are added to the ink composition can be obtained by the use of colored supports.

To improve the coating properties of the ink, it is also possible to add various chemicals, e.g., a surfactant, varnish, compound, drying inhibitor, and dryer, as long as they have no influence on color formation of the ink for sensing carbon dioxide gas.

As a method of coating a support with the ink, it is possible to preferably use printing methods such as screen printing, relief printing, and gravure printing, and coating methods such as roll coating, spray coating, and dip coating.

An indicating portion used in the present invention desirably has a relatively large, constant coating amount of the ink composition. Therefore, the use of a printing method is preferred.

A package having the indicator of the present invention can be formed by printing an indicating portion used in the present invention on an outer package.

For example, when a package is to be formed by continuously printing an indicating portion on a support and heat-sealing and cutting the resultant material, the support can be supplied and winded. Hence, gravure printing or flexographic printing is suitable.

As a support, a material which does not react with the ink composition of the present invention and does not inhibit coloration of a reagent can be selected. As this support, it is possible to use, e.g., paper, synthetic paper, non-woven fabric, or a synthetic resin film in accordance with the purpose or the form of use.

The indicating portion is preferably an ink layer having patterns such as characters or graphics.

Especially when characters are chosen as an indicating portion, this indicating portion can also be used as a label having a trade name or the like printed on it. Furthermore, a support can be properly colored to make the indicating portion easier to see.

Examples of the form of use of the carbon dioxide indicator of the present invention are: (1) a method of forming a carbon dioxide ambient in a container made of a gas barrier material to store contents such as foods, drinks, or chemicals, and setting the carbon dioxide indicator inside this container; and (2) a method by which a container made of a gas-permeable material to store contents is packaged in an outer package made of a gas barrier material, a carbon dioxide ambient is formed in this outer package, and the carbon dioxide indicator is set inside the outer package.

More specifically, in method (1) described above, the carbon dioxide indicator can be set by a method by which the carbon dioxide indicator printed on a support made of, e.g., paper, synthetic paper, non-woven fabric, a synthetic resin film, or a laminated body combining at least two of these materials, is simply placed in the container, a method of adhering the carbon dioxide indicator to the inner surface of the container, or a method which uses the material of the container as a support and directly prints the ink composition of the present invention on the inner surface of the container.

In method (2) described above, the carbon dioxide indicator can be set on the outer surface of the container, in the space between the container and the outer package, or on the inner surface of the outer package. As a method of setting the carbon dioxide indicator on the outer surface of the container or on the inner surface of the outer package, it is possible to use a method of adhering the indicator to these surfaces or a method of directly printing the ink composition of the present invention on these surfaces.

When the ink composition of the present invention is to be directly printed on the inner surface of the container made of a gas barrier material in method (1), or on the outer surface of the gas-permeable container or the inner surface of the outer package made of a gas barrier material in method (2), the printing surface can also be covered with a gas-permeable film. When the surface is thus covered, the ink composition does not contact the contents or the container. This is sanitary and can prevent wear of the indicating portion.

The carbon dioxide indicator of the present invention is applicable to foods, drinks, and chemicals which may deteriorate upon contact with oxygen, or to foods, drinks, and chemicals which may change in quality or loose their effects by release of carbon dioxide gas.

Examples of foods are tea, coffee, cheese, ham, miso, and raw meat. Examples of chemicals are a bicarbonate-containing liquid medicine, amino acid parenteral liquid, fat emulsion preparations, and antibiotic preparations. In particular, a bicarbonate-containing liquid medicine loses its effect by releasing carbon dioxide gas. Therefore, when a container containing this bicarbonate-containing liquid medicine is packaged together with carbon dioxide gas in an outer package, the liquid medicine can be stored while release of carbon dioxide gas is prevented.

The present invention will be described in detail below with reference to the accompanying drawings.

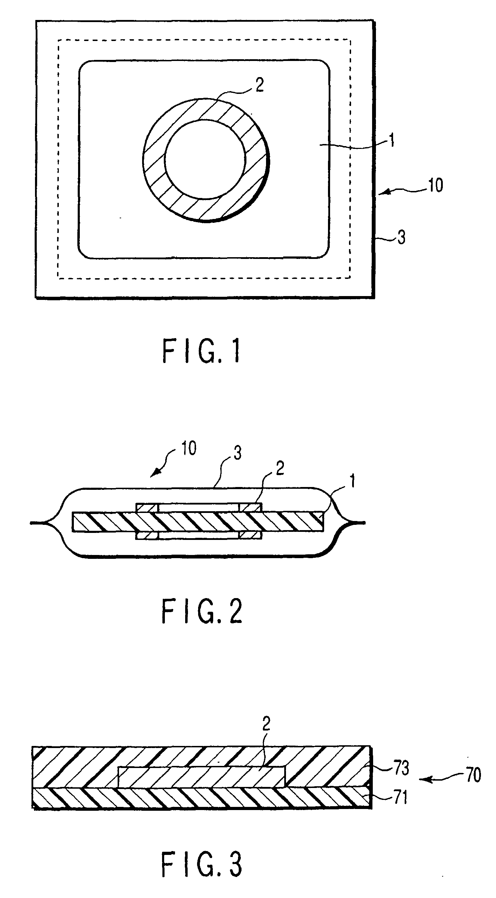

FIG. 1 is a front view showing the first example of the carbon dioxide indicator of the present invention. FIG. 2 is a sectional view of FIG. 1.

As shown in FIGS. 1 and 2, this indicator 10 has a structure in which indicating portions 2 are formed by coating, by screen printing, the two surfaces of a support 1 made of, e.g., a polyethyleneterephthalate film, with a circular pattern of an ink composition for sensing carbon dioxide gas, which contains, e.g., metacresol purple, sodium carbonate, polyvinylacetal resin, fine-crystal cellulose, and water, and the support 1 and the indicating portions 2 are surrounded by a porous film 3 having carbon dioxide permeability. The indicating portions of this indicator are purple in normal air. Referring to FIGS. 1 and 2, the indicating portions 2 are formed on the two surfaces of the support 1. However, an indicating portion can also be formed only on one surface. Also, although this indicator is surrounded by the air-permeable film 3, the indicator can be used without using this air-permeable film 3.

FIG. 3 is a sectional view showing the arrangement of the second example of the carbon dioxide indicator of the present invention.

As shown in FIG. 3, this carbon dioxide indicator 70 is an example in which an indicating portion is formed only on one surface. The carbon dioxide indicator 70 includes a carbon-dioxide-impermeable layer 71 as a support, which is a film formed by vapor-depositing silica on a polyester resin, an indicating portion 2 formed by coating, by screen printing, this carbon-dioxide-impermeable layer 71 with a circular pattern of an ink composition for sensing carbon dioxide gas, which contains, e.g., metacresol purple, sodium carbonate, polyvinylacetal resin, fine-crystal cellulose, and water, and a carbon-dioxide-permeable layer 73 made of, e.g., polyethylene film and so formed as to seal the indicating portion 2 formed on the carbon-dioxide-impermeable layer 71.

Carbon-dioxide-impermeability means having a carbon dioxide permeability of 50 (ml/m²·24 hr) or less.

Carbon-dioxide-permeability means having a carbon dioxide permeability of 500 (ml/m²·24 hr) or more.

This carbon dioxide indicator 70 allows permeation of and senses carbon dioxide gas only from the carbon-dioxide-permeable layer 73 and does not allow permeation of any carbon dioxide gas from the support. For example, a package can be formed by using an outer package of this package as a support, such that the carbon-dioxide-impermeable layer 71 is on the outside, the carbon-dioxide-permeable layer 73 is on the inside, and this carbon dioxide indicator 70 functions inside the package. The package thus obtained has high response to changes in the ambient. Additionally, the storage stability of the contents is high because retention of carbon dioxide gas is high.

If the carbon dioxide permeability of the layer which passes carbon dioxide gas is lower than 500 (ml/m²·24 hr), the response to changes in the carbon dioxide ambient lowers. This may make determination errors.

Also, if the carbon dioxide permeability of the layer which does not pass carbon dioxide gas is higher than 50 (ml/m²·24 hr) when the package is formed, the carbon dioxide ambient in the package cannot be retained.

Examples of a resin film having a carbon dioxide permeability of 50 (ml/m²·24 hr) or less which can be used in the present invention are a transparent vapor-deposited film formed by vapor-depositing silica or alumina on a synthetic resin substrate film such as a polyester (PET) film or a nylon (Ny) film, a polyvinylidene chloride (PVDC) film, a polyvinyl alcohol (PVA) film, and an ethylene vinyl acetate copolymer film.

These films can be used singly or in the form of a laminated film. Also, another resin film can be laminated to obtain strength or heat resistance meeting the intended use. As an example, a nylon film or the like can be laminated to obtain high-needle impact strength.

Examples of a film having a carbon dioxide permeability of 500 (ml/m²·24 hr) or more used in the present invention are polyolefins such as a polyethylene film and polypropyrene film. Low-density polyethylene and unstretched polypropyrene are best suited as an inner layer of a package because they have heat-sealing properties.

A known method can be used as a method of adhering a support having an indicating portion printed on it, a film having a carbon dioxide permeability of 50 (ml/m²·24 hr) or less, a film having a carbon dioxide permeability of 500 (ml/m²·24 hr) or more, and another film. For example, dry lamination using an adhesive is usable.

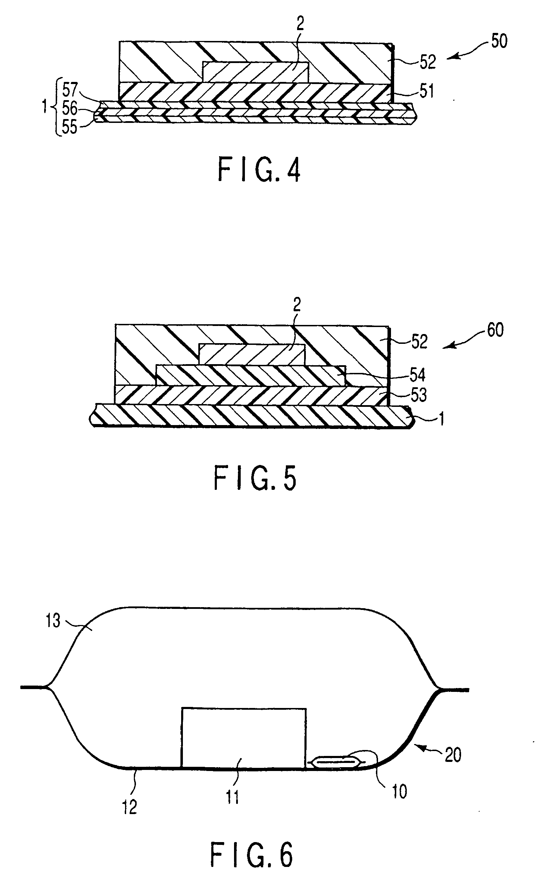

FIG. 4 is a sectional view showing the arrangement of the third example of the carbon dioxide indicator of the present invention.

As shown in FIG. 4, this carbon dioxide indicator 50 includes a support 1 which comprises a nylon film 55 having an alumina deposition layer (not shown) and a polyester film 57 laminated on the nylon film 55 via an adhesive layer 56 and having an alumina deposition layer (not shown), an anchor coat layer 51 formed on the support 1, an indicating portion 2 gravure-printed into a predetermined pattern on the anchor coat layer 51 by using an ink composition for sensing carbon dioxide gas, which contains, e.g., metacresol purple, sodium carbonate, polyvinylacetal resin, fine-crystal cellulose, and water, and an overcoat layer 52 formed on the anchor coat layer 51 having the indicating portion 2 printed on it, so as to seal this indicating portion 2. The indicating portion 2 of this indicator is purple in normal air.

A pH indicator in the indicating portion 2 reacts via a solvent, e.g., a hydrophilic solvent such as water or an alcohol compound. Therefore, this indicating portion 2 can contain such a solvent. Hence, the indicating portion 2 easily collects water and impairs its external appearance. Additionally, the indicating portion 2 is vulnerable to external shocks and readily causes peeling or breakage around it. By sandwiching the indicating portion 2 between the anchor coat layer 51 and the overcoat layer 52 as in this carbon dioxide indicator 50, it is possible to protect the ink composition for sensing carbon dioxide gas, which forms the indicating portion 2, thereby preventing a bad external appearance, peeling, and breakage. Furthermore, this improves the long-term stability, including the light resistance and heat resistance, of the carbon dioxide indicator.

As the anchor coat layer 51, a material which is non-water-soluble and improves adhesion between the support 1 and the indicating portion 2 formed on it can be preferably used. As the overcoat layer 52, it is preferable to use a material having high carbon dioxide permeability, high adhesion with the indicating portion 2, and high adhesion with, e.g., an adhesive layer or another resin layer which can be additionally formed on the indicating portion 2.

As this material, a urethane-based resin, polyvinylacetal resin, and the like can be used singly or combination thereof.

For example, a urethane resin can enhance adhesion between the support 1 and the indicating portion 2 and thereby effectively prevent peeling, breakage, and the like between the support 1 and the indicating portion 2. Also, a polyvinylacetal resin is highly adhesive to the support 1 and has a hydrophilic group. The presence of this hydrophilic group can prevent scattering of water from the indicating portion 2 and facilitate taking in water from external, e.g., air. Accordingly, a polyvinylacetal resin helps maintain an enough amount of water to at least allow the pH indicator in the indicating portion 2 to function.

In this example, the indicating portion is formed only on one main surface of the support 1. However, a structure in which indicating portions 2 are formed on both of two main surfaces of the support 1 is also applicable. When the indicating portion is to be formed only on one main surface of the support 1, it is possible, where necessary, to use the carbon-dioxide-impermeable layer described above as the support and form the carbon-dioxide-permeable layer on the overcoat layer, respectively.

FIG. 5 is a sectional view showing the arrangement of the fourth example of the carbon dioxide indicator.

As shown in FIG. 5, this carbon dioxide indicator 60 is an improved modification of the carbon dioxide indicator 50 mentioned above. The carbon dioxide indicator 60 has the same structure as the carbon dioxide indicator shown in FIG. 4 except that a laminated structure of a first anchor coat layer 53 and a second anchor coat layer 54, instead of the anchor coat layer 51, is formed on a support 1. Preferably, the edges of the first anchor coat layer 53 and an overcoat layer 52 are closely adhered to seal an indicating portion 2 and the second anchor coat layer 54 in the two layers 52 and 53.

As the first anchor coat layer, a non-water-soluble material, e.g., a urethane-based resin, highly adherent to the support 1 is preferably used.

As the second anchor coat layer 2, it is favorable to use a material highly adherent to the first anchor coat layer and the indicating portion 2, and preferably having a hydrophilic group to achieve a water retaining effect with respect to the indicating portion 2 which contains water. A polyvinylacetal resin is an example.

As a coating method of the anchor coat and overcoat layers, it is possible to preferably use, e.g., printing methods such as screen printing, relief printing, and gravure printing, and coating methods such as roll coating, spray coating, and dip coating.

In this carbon dioxide indicator 60, the anchor coat layer is divided into two layers. Therefore, it is possible obtain an effect of enhancing adhesion between the support 1 and the indicating portion 2 by the first anchor coat layer 53 and an effect of keeping an enough amount of water to at least allow a pH indicator in the indicating portion 2 to function by the second anchor coat layer 54. Accordingly, the carbon dioxide indicator 60 can implement stronger adhesion and more effective water retention characteristics of the indicating portion than when only one anchor coat layer is formed as in the carbon dioxide indicator 50 shown in FIG. 4. This further improves the long-term stability, including the light resistance and heat resistance, of the carbon dioxide indicator.

In this example, the indicating portion is formed only on one main surface of the support 1. However, a structure in which indicating portions 2 are formed on both of two main surfaces of the support 1 is also applicable. When the indicating portion is to be formed only on one main surface of the support 1, it is possible, where necessary, to use the carbon-dioxide-impermeable layer described above as the support and form the carbon-dioxide-permeable layer on the overcoat layer, respectively.

FIG. 6 is a view showing the first example of a gas-replaced package according to the present invention. As shown in FIG. 6, this gas-replaced package 20 has a structure in which a polyethylene container 11 containing contents, e.g., a liquid medicine or drink and a carbon dioxide indicator 10 are sealed in an outer package 12 which is a gas barrier laminated film by using a gas mixture 13 containing 50 vol% of nitrogen and 50 vol% of carbon dioxide, as a replacement gas.

An indicating portion 2 of the indicator in this package is yellow when sealed. However, if a pinhole is formed or poor seal occurs in the package, the replacement gas leaks, and the ambient atmosphere mixes instead, the carbon dioxide concentration in the package lowers. Consequently, the gas ambient around the indicator 10 changes, and this changes the color of the indicating portion 2 from yellow to light brown, and then to purple, in accordance with the pH. By visually observing this color change, whether the carbon dioxide-containing ambient in the package is retained can be easily checked.

Instead of the carbon dioxide indicator 10, the third and fourth examples of the above-mentioned carbon dioxide indicator can be applied.

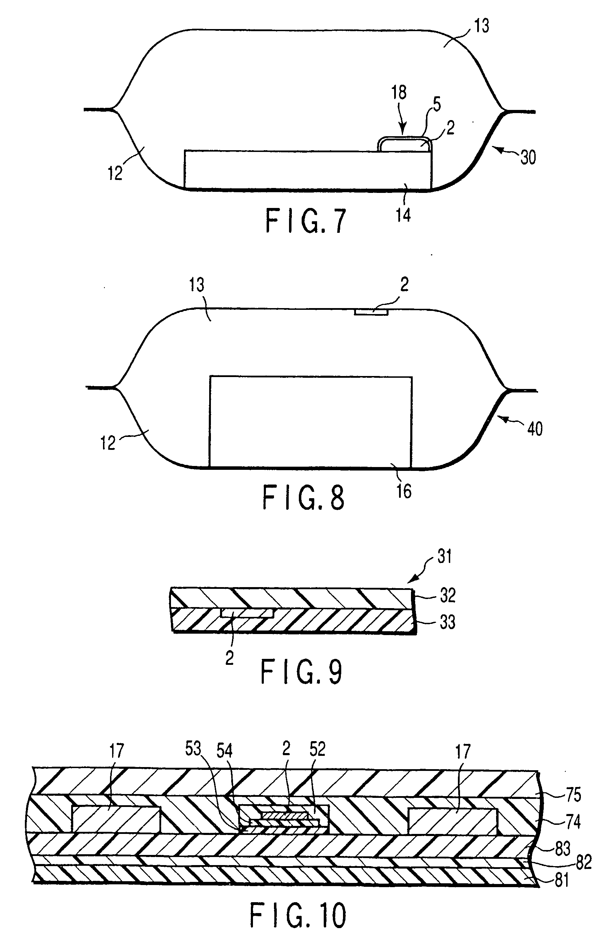

FIG. 7 shows the second example of the gas-replaced package according to the present invention.

As shown in FIG. 7, this package 30 has a structure in which, on the surface of a polyethylene container 14 which vacuum-packages contents such as raw block meat, a carbon dioxide indicator 18 is formed which includes an indicating portion 2 formed by screen printing by using an outer package of the container 14 as a support and a covering layer 5 formed to cover this indicating portion 2 by using an air-permeable material, and the container 14 and the carbon dioxide indicator 18 are sealed with an outer package 12 which is a gas barrier laminated film by using a gas mixture containing 50 vol% of nitrogen and 50 vol% of carbon dioxide, as a replacement gas. A package can also be formed which is the same as the package 30 shown in FIG. 7 except that the covering layer 5 is not formed.

Similar to the package shown in FIG. 6, it is readily possible by visually observing a change in the color of this package 30 to check whether the gas ambient containing carbon dioxide gas in the package is retained.

Instead of the carbon dioxide indicator 18, the second, third, and fourth examples of the above-mentioned carbon dioxide indicator can be applied.

FIG. 8 shows the third example of the gas-replaced package according to the present invention.

In addition to the packages shown in FIGS. 6 and 7, an indicating portion 2 can also be integrated with a package as shown in FIG. 8 by printing the indicating portion 2 on an outer package 12 or adhering an indicator 10 which includes a support 1 having the indicating portion 2 to the outer package 12.

This package 40 comprises a carbon dioxide indicator having the outer package 12 which is a gas barrier laminated film, and the indicating portion 2 formed by, e.g., screen printing, on the inner surface of the outer package 12 by using this outer package 12 as a support. For example, this package 40 can be formed by arranging two laminated films such that the indicating portion is on the inside, placing contents 16 between them, and air-tightly sealing the edges of the outer package 12 by heat sealing while replacement is performed using a gas mixture 13 containing 50 vol% of nitrogen and 50 vol% of carbon dioxide.

FIG. 9 is a view showing an example of the structure of a carbon dioxide indicator usable in the third example of the gas-replaced package according to the present invention.

In an indicator having an indicating portion 2 printed by using an outer package 12 as a support, as shown in FIG. 9, this indicating portion 2 can be formed on the inner surface of a gas barrier layer 32 in a gas barrier material 31; and the inner surface of the indicating portion 2 can be covered with a carbon-dioxide-permeable protective film 33.

When the indicating portion 2 is not exposed as in this structure, this indicating portion 2 does not directly contact the container or its contents. It is also possible to prevent wear of the indicating portion 2 during manufacturing steps or transportation.

Instead of the above carbon dioxide indicator, the second, third, and fourth examples of the above-mentioned carbon dioxide indicator can be applied.

FIG. 10 is a sectional view showing an example in which the fourth example of the carbon dioxide indicator according to the present invention is applied to an outer package of a package.

As shown in FIG. 10, as an outer package serving as a support, a laminated film obtained by, e.g., laminating a nylon film 81 having an alumina deposition layer (not shown) and a polyester film 83 having an alumina deposition layer (not shown) via an adhesive layer 82 is used. As in the fourth example of the carbon dioxide indicator shown in FIG. 5, this carbon dioxide indicator is obtained by forming, on this laminated film, a laminated structure of a first anchor coat layer 53 and a second anchor coat layer 54, an indicating portion 2, and an overcoat layer 52 in this order. In the other region on this outer package, an arbitrary ink layer 17 having characters indicating a trade name or patterns such as images can be formed when this carbon dioxide indicator 80 is formed. In addition, a sealant layer 75 made of low-density polyethylene is formed on the overcoat layer 52 and the ink layer 17 via, e.g., an adhesive layer 74.

A package with a carbon dioxide indicator is obtained by the use of the outer package having this carbon dioxide indicator by sealing the contents by using a gas mixture 13 containing 50 vol% of nitrogen and 50 vol% of carbon dioxide, as a replacement gas.

The obtained package can implement strong adhesion of the indicating portion and effective water retention in this indicating portion. Furthermore, the long-term stability, including the light resistance and heat resistance, of this package with a carbon dioxide indicator improves.

### Examples

The present invention will be described in more detail below by way of its examples.

First, various ink compositions for sensing carbon dioxide gas were formed, and their color changes with respect to carbon dioxide contents were examined.

### Example 1

An ink composition was obtained by finely dispersing ink composition 1, having the following composition, for sensing carbon dioxide gas by using a paint conditioner or the like.

**Ink composition 1 for sensing carbon dioxide gas**

| | |
|---|---|
| Metacresol purple | 0.1 g |
| Sodium carbonate | 1.5 g |
| Polyvinylacetal resin | 17.5 g |
| Fine-crystal cellulose | 11 g |
| Water | 70 g |

As a support, JIS standard P 3801 chemical analytical filter paper weighing 140 g/m² was used. This filter paper was coated with ink composition 1 by screen printing, and the resultant structure was dried at 70°C for 1 hr to obtain an indicator.

Bags having an internal volume of 50 ml were formed using a gas barrier laminated film composed of a vinylidene chloride-coated nylon film (thickness 25 µm)/low-density polyethylene film (thickness 50 µm). The above-mentioned indicator and a gas mixture of nitrogen gas and carbon dioxide gas were sealed while the concentration of the carbon dioxide gas was variously changed, and their color changes were observed. The obtained results are shown in Table 2 below.

### Example 2

Test packages were formed following the same procedure as in Example 1 except that ink composition 1 for sensing carbon dioxide gas in Example 1 was changed to ink composition 2 for sensing carbon dioxide gas and a 12-µm thick polyester film was used as a support, and their color changes were observed. The obtained results are shown in Table 2 below.

**Ink composition 2 for sensing carbon dioxide gas**

| | |
|---|---|
| Metacresol purple | 0.1 g |
| Sodium hydroxide | 1.0 g |
| Polyvinylacetal resin | 17.5 g |
| Fine-crystal cellulose | 11 g |
| Water | 70 g |

### Example 3

Test packages were formed following the same procedure as in Example 1 except that ink composition 1 for sensing carbon dioxide gas in Example 1 was changed to ink composition 3 for sensing carbon dioxide gas, and their color changes were observed. The obtained results are shown in Table 2 below.

**Ink composition 3 for sensing carbon dioxide gas**

| | |
|---|---|
| Metacresol purple | 0.1 g |
| Sodium carbonate | 1.5 g |
| Polyvinylacetal resin | 17.5 g |
| Water | 78.8 g |

### Example 4

Test packages were formed following the same procedure as in Example 1 except that ink composition 1 for sensing carbon dioxide gas in Example 1 was changed to ink composition 4 for sensing carbon dioxide gas, and their color changes were observed. The obtained results are shown in Table 2 below.

**Ink composition 4 for sensing carbon dioxide gas**

| | |
|---|---|
| Metacresol purple | 0.1 g |
| Sodium carbonate | 1.5 g |
| Polyvinylacetal resin | 19.7 g |
| water | 78.8 g |
| Glycerin | 11 g |

### Example 5

Test packages were formed following the same procedure as in Example 1 except that ink composition 4 for sensing carbon dioxide gas in Example 4 was changed to ink composition 5 for sensing carbon dioxide gas, and their color changes were observed. The obtained results are shown in Table 2 below.

**Ink composition 5 for sensing carbon dioxide gas**

| | |
|---|---|
| Metacresol purple | 0.1 g |
| Sodium carbonate | 1.5 g |
| Polyvinylacetal resin | 19.7 g |
| Fine-crystal cellulose | 11 g |
| 2-(2-n-butoxyethoxy)ethyl acetate | 78.8 g |
| Glycerin | 11 g |

**Table 2**

| | Coloration | | | | |
|---|---|---|---|---|---|
| CO₂ Concentration | Example 1 | Example 2 | Example 3 | Example 4 | Example 5 |
| 0% | Purple | Purple | Purple | Purple | Purple |
| 1% | Brown | Light brown - Yellow | Brown | Brown | Brown |
| 5% | Yellow | Yellow | Light brown | Light brown | Yellow |
| 10% | Yellow | Yellow | Yellow | Yellow | Yellow |
| 20% | Yellow | Yellow | Yellow | Yellow | Yellow |
| 50% | Yellow | Yellow | Yellow | Yellow | Yellow |

As shown in Table 2, when the ink compositions for sensing carbon dioxide gas according to the present invention are used, color changes which allow easy visual observation of changes in the gas ambient are obtained.

### Example 6

Test packages were formed following the same procedure as in Example 1 except that ink composition 1 for sensing carbon dioxide gas in Example 1 was changed to ink composition 6 for sensing carbon dioxide gas, and their color changes were observed. The obtained results were as follows.

**Ink composition 6 for sensing carbon dioxide gas**

| | |
|---|---|
| Phenolphthalein | 0.1 g |
| Sodium carbonate | 1.5 g |
| Polyvinylacetal resin | 19.7 g |
| Water | 78.8 g |
| Food blue No. 1 | 0.01 g |

The indicator colored blue in a carbon dioxide ambient and purple in an ambient containing no carbon dioxide gas.

### Example 7

Test packages were formed following the same procedure as in Example 1 except that ink composition 1 for sensing carbon dioxide gas in Example 1 was changed to ink composition 7 for sensing carbon dioxide gas, and their color changes were observed. The obtained results were as follows.

**Ink composition 7 for sensing carbon dioxide gas**

| | |
|---|---|
| Bromothymol blue | 0.1 g |
| Urethane resin | 26.1 g |
| Water | 61.3 g |

The indicator colored blue in a carbon dioxide ambient and purple in an ambient containing no carbon dioxide gas.

### Example 8

Test packages were formed following the same procedure as in Example 1 except that ink composition 1 for sensing carbon dioxide gas in Example 1 was changed to ink composition 8 for sensing carbon dioxide gas, and their color changes were observed. The obtained results were as follows.

**Ink composition 8 for sensing carbon dioxide gas**

| | |
|---|---|
| Bromothymol blue | 0.1 g |
| Urethane resin | 26.2 g |
| Fine-crystal cellulose | 11 g |
| Water | 61.3 g |

The indicator colored yellow in a carbon dioxide ambient and blue in an ambient containing no carbon dioxide gas.

### Experimental Examples

Experimental examples will be described below in each of which an ink composition for sensing carbon dioxide gas of the present invention was used as a part of an outer package of a package.

In Experimental Examples 1 to 7, outer packages were formed by printing indicating portions on various carbon-dioxide-impermeable films by using inks for sensing carbon dioxide gas, and laminating diverse carbon-dioxide-permeable films on the resultant structures.

### Experimental Example 1

An ink composition was obtained by finely dispersing ink composition 9 for sensing carbon dioxide gas presented below by using a paint conditioner or the like.

**Ink composition 9 for sensing carbon dioxide gas**

| | |
|---|---|
| Metacresol purple | 1 g |
| Polyvinylacetal resin | 7 g |
| Water | 92 g |
| Propanol | 21 g |
| Sodium hydroxide | 4 g |
| Glycerin | 5 g |

A silica-deposited polyester film having a 12-µm thick polyester layer and a 40-nm thick silica deposition layer deposited on one surface of the polyester layer was prepared. An indicating portion was printed by gravure printing on the polyester layer by using the above ink composition. A 25-µm thick low-density polyethylene film was laminated as a sealant on the polyester layer having the indicating portion by using a urethane-based adhesive, thereby obtaining a laminated body.

This laminated body was used to form a package (100 mm × 100 mm) such that the sealant was on the inside, and the package was filled with 50 ml of nitrogen gas to which 50 vol% of carbon dioxide were added, and sealed. The response of the indicating portion of the obtained package and the carbon dioxide concentration in the package were measured.

The response was evaluated as good if the color changed from purple to yellow within 30 min after the package was filled with the gas; in other cases, the response was evaluated as unsatisfactory.

The measurement of the carbon dioxide concentration was performed after the package was stored for 30 days at a temperature of 40°C and a humidity of 75%, and at the same time the indicating portion was observed. The obtained results are shown in Table 3.

In addition, the carbon dioxide permeability of each of a silica-deposited polyester film and sealant similar to those used in the experiment was measured. The results are also shown in Table 3 below. Experimental Example 2

A 12-µm thick polyester film was prepared, and an indicating portion and sealant were laminated in the same manner as in Experimental Example 1. Also, an alumina-deposited nylon film having a 20-nm thick alumina deposition layer on a 15-µm thick nylon film was laminated, by using a urethane-based adhesive, on the other side surface of the surface on which the indicating portion was formed, such that the vapor deposition surface was closely adhered to the polyester film. In this way, a laminated body was obtained.

Following the same procedures as in Experimental Example 1, the obtained laminated body was used to form a package, its response and carbon dioxide concentration were measured, and its indicating portion was observed. The results are shown in Table 3 below.

In addition, the carbon dioxide permeability of each of a laminated body of a polyester film and alumina-deposited nylon film and a sealant similar to those used in the experiment was measured. The results are also shown in Table 3 below.

### Experimental Example 3

A 12-µm thick polyester film similar to that used in Experimental Example 2 was prepared, and an indicating portion was printed in the same manner as in Experimental Example 1. After that, a 25-µm thick unstretched polypropylene film was laminated as a sealant on the indicating portion by using a urethane-based adhesive. Furthermore, a K-coated nylon: film which was a 15-µm thick nylon film coated with 1 g/m² of polyvinylidene chloride was laminated, by using a urethane-based adhesive, on the other side surface of the surface on which the indicating portion was formed, such that the coated surface was closely adhered to the polyester film. In this way, a laminated body was obtained.

Following the same procedures as in Experimental Example 1, the obtained laminated body was used to form a package, its response and carbon dioxide concentration were measured, and its indicating portion was observed. The results are shown in Table 3 below.

In addition, the carbon dioxide permeability of each of a laminated body of a polyester film and polyvinylidene chloride-coated nylon film and a unstretched polypropylene film similar to those used in the experiment was measured. The results are also shown in Table 3 below.

### Experimental Example 4

A 12-µm thick polyester film similar to that used in Experimental Example 2 was prepared, and an indicating portion and unstretched polypropylene film were laminated in the same manner as in Experimental Example 3. A 15-µm thick polyvinyl alcohol film was laminated, by using a urethane-based adhesive, on the other side surface of the surface on which the indicating portion was formed. Furthermore, a 12-µm thick polyester film was similarly laminated on the polyvinyl alcohol film to obtain a laminated body.

Following the same procedures as in Experimental Example 1, the obtained laminated body was used to form a package, its response and carbon dioxide concentration were measured, and its indicating portion was observed. The results are shown in Table 3 below.

In addition, a laminated body was formed using a polyester film, polyvinyl alcohol film, and polyester film similar to those used in the experiment, and the carbon dioxide permeability of this laminated body and that of an unstretched polyethylene film were measured. The results are also shown in Table 3 below. Experimental Example 5

A polyester film similar to that used in Experimental Example 2 was prepared, and an indicating portion and low-density polyethylene film were laminated in the same manner.

Furthermore, a 30-µm thick co-extruded film of nylon (NY) and an ethylene vinyl acetate copolymer (EVOH) was laminated, by using a urethane-based adhesive, on the other side surface of the surface on which the display portion was formed, such that the EVOH was closely adhered to the polyester film. In this way, a laminated body was obtained.

Following the same procedures as in Experimental Example 1, the obtained laminated body was used to form a package, its response and carbon dioxide concentration were measured, and its indicating portion was observed. The results are shown in Table 3 below.

In addition, a laminated body was formed using a polyester film and NY/EVOH co-extruded film similar to those used in the experiment, and the carbon dioxide permeability of this laminated body and that of a low-density polyethylene film were measured. The results are also shown in Table 3 below.

### Experimental Example 6

An indicating portion was similarly printed on a 12-µm thick polyester film analogous to that used in Experimental Example 2. After that, a 40-µm thick silica-deposited nylon film on a 15-µm thick nylon film was laminated on the indicating portion by using a urethane-based adhesive. Furthermore, a urethane-based adhesive was used to laminate a 25-µm thick low-density polyethylene film as a sealant.

Following the same procedures as in Experimental Example 1, the obtained laminated body was used to form a package, its response and carbon dioxide concentration were measured, and its indicating portion was observed. The results are shown in Table 3 below.

In addition, a laminated body was formed using a silica-deposited nylon film and low-density polyethylene film similar to those used in the experiment, and the carbon dioxide permeability of each of a polyester film analogous to that used in the experiment and the obtained laminated body was measured. The results are also shown in Table 3 below. Experimental Example 7

An indicating portion was similarly printed on a 12-µm thick polyester film analogous to that used in Experimental Example 2. After that, a 25-µm thick low-density polyethylene film was laminated as a sealant on the indicating portion by using a urethane-based adhesive.

Following the same procedures as in Experimental Example 1, the obtained laminated body was used to form a package, its response and carbon dioxide concentration were measured, and its indicating portion was observed. The results are shown in Table 3 below. In addition, the carbon dioxide permeability of each of a polyester film and low-density polyethylene film analogous to those used in the experiment was measured. The results are also shown in Table 3 below.

**Table 3-1**

| | | | Experimental Example 1 | Experimental Example 2 | Experimental Example 3 | Experimental Example 4 |
|---|---|---|---|---|---|---|
| Carbon Dioxide | | Inside | 20,000 | 20,000 | 20,000 | 10,000 |
| Permeability (ml/m²·24hr) | | Outside | 0.1 | 0.2 | 10 | 1.0 |
| Response | | | Good | Good | Good | Good |
| After Storage | Carbon dioxide Concentration(%) | | 50% | 49% | 45% | 48% |
| | Color Of Indicating Portion | | Yellow | Yellow | Yellow | Yellow |

**Table 3-2**

| | | | Experimental Example 5 | Experimental Example 6 | Experimental Example 7 |
|---|---|---|---|---|---|
| Carbon Dioxide | | Inside | 10,000 | 0.2 | 20,000 |
| Permeability (ml/m²·24hr) | | Outside | 1.0 | 300 | 300 |
| Response | | | Good | No Response | Good |
| After Storage | Carbon dioxide Concentration(%) | | 48% | 49% | 0.1% |
| | Color Of Indicating Portion | | Yellow | Purple | Purple |

As shown in Table 3, each of the packages of Experimental Examples 1 to 5 had good response and had no problem in the carbon dioxide concentration after storage. Also, the color of the indicating portion of each package was consistent with the carbon dioxide concentration.

If, however, the carbon dioxide permeability inside the package was low as in Experimental Example 6, the response suffered. If the carbon dioxide permeability of the whole package was high as in Experimental Example 7, the storage stability was low, so carbon dioxide gas leaked from the package.

As is apparent from Experimental Examples 1 to 5, when the laminated body outside the indicating portion of the package has a carbon dioxide permeability of 50 (ml/m²·24 hr) or less and the laminated body inside the indicating portion of the package has a carbon dioxide permeability of 500 (ml/m²·24 hr) or more, an indicator capable of sensibly responding to changes in the internal carbon dioxide ambient of the package is implemented. Additionally, the package has high retention of the internal carbon dioxide gas and has high storage stability of its contents.

Various examples of a carbon dioxide indicator having a structure in which after an anchor coat layer is formed on a support, an indicating portion is printed, and an overcoat layer is further formed will be described below.

### Experimental Example 8

An ink composition was formed by finely dispersing ink composition 10 for sensing carbon dioxide gas described below by using a paint conditioner or the like.

| | |
|---|---|
| Metacresol purple | 1 g |
| Polyvinylacetal resin | 7 g |
| Water | 92 g |
| Propanol | 21 g |
| Sodium hydroxide | 4 g |
| Glycerin | 5 g |

As a support, a 12-µm thick silica-deposited polyester film having a 40-nm thick silica deposition layer and polyester layer was prepared. The surface of this polyester layer was coated, by gravure printing, with a first anchor coating agent primarily consisting of a urethane-based resin and a second anchor coating agent primarily consisting of a vinylacetal resin, thereby obtaining first and second anchor coat layers.

After that, the second anchor coat layer was coated with the above ink composition by gravure printing to form an indicating portion.

The obtained indicating portion was coated with a first overcoating agent consisting of a vinylacetal resin and a second overcoating resin consisting of a urethane resin in this order by gravure printing, thereby forming first and second overcoat layers. After these layers were dried, a 25-µm thick low-density polyethylene film was adhered by dry lamination by using a urethane-based adhesive, thereby obtaining a laminated body.

The obtained laminated body was subjected to evaluation tests 1 to 3 described below.

### Evaluation Test 1

50 ml of a gas mixture in which the concentration ratio of nitrogen gas/carbon dioxide gas was 50/50 were sealed in a package by using the obtained laminated body, and bag making was completely performed to form a test package. The coloration of the obtained package was examined. The results are shown in Table 4 below. Evaluation Test 2

The light resistance and heat resistance of a package analogous to that used in evaluation test 1 were examined. The light resistance was tested under conditions equivalent to 1,200,000 lx*hr, and the heat resistance was tested at 60°C for two weeks. Whether the indicating portion of the package opened to the atmosphere after these tests changed its color from yellow to purple was checked.

A water resistance test was conducted by leaving the obtained laminated body to stand for one day in the atmosphere at a high temperature of 40°C and a high humidity of 75%, and observing the surface of the indicating portion. The results obtained by these tests are shown in Table 4 below.

### Evaluation Test 3

A plastic ample-containing package was obtained following the same procedures as in Experiment 1 except that the package was made by putting 50 ml of plastic ample-containing distilled water in the package and sealing 50 ml of a gas mixture in which the concentration ratio of nitrogen gas/carbon dioxide gas was 50/50. These packages were packed 20 by 20 in boxes, and a transportation test of a round trip of 200 km by a truck was conducted. The results are shown in Table 5.

### Experimental Example 9

A laminated body was obtained following the same procedures as in Experimental Example 8 except that the first overcoat layer consisting of a vinylacetal resin was omitted.

The obtained laminated body was used to conduct evaluation tests 1 to 3 following the same procedures as in Experimental Example 8. The obtained results are shown in Tables 4 and 5.

### Experimental Example 10

A laminated body was obtained following the same procedures as in Experimental Example 8 except that the second overcoat layer consisting of a urethane-based resin was omitted.

The obtained laminated body was used to conduct evaluation tests 1 to 3 following the same procedures as in Experimental Example 8. The obtained results are shown in Tables 4 and 5.

### Experimental Example 11

A laminated body was obtained following the same procedures as in Experimental Example 8 except that the first and second overcoat layers were omitted.

The obtained laminated body was used to conduct evaluation tests 1 to 3 following the same procedures as in Experimental Example 8. The obtained results are shown in Tables 4 and 5.

### Experimental Example 12

A laminated body was obtained following the same procedures as in Experimental Example 8 except that only a first anchor coat layer consisting of a urethane-based resin and a second overcoat layer consisting of a urethane-based resin were formed as an anchor coat layer and an overcoat layer, respectively.

The obtained laminated body was used to conduct evaluation tests 1 to 3 following the same procedures as in Experimental Example 8. The obtained results are shown in Tables 4 and 5.

### Experimental Example 13

A laminated body was obtained following the same procedures as in Experimental Example 8 except that only a second anchor coat layer consisting of a vinylacetal resin and a first overcoat layer consisting of a urethane-based resin were formed as an anchor coat layer and an overcoat layer, respectively.

The obtained laminated body was used to conduct evaluation tests 1 to 3 following the same procedures as in Experimental Example 14. The obtained results are shown in Tables 4 and 5.

### Experimental Example 14

A laminated body was obtained following the same procedures as in Experimental Example 8 except that only a second overcoating agent consisting of a urethane resin was used as an overcoat layer and anchor coat layers were omitted.

The obtained laminated body was used to conduct evaluation tests 1 to 3 following the same procedures as in Experimental Example 8. The obtained results are shown in Tables 4 and 5.

### Experimental Example 15

A laminated body was obtained following the same procedures as in Experimental Example 8 except that overcoat layers and anchor coat layers were omitted.

The obtained laminated body was used to conduct evaluation tests 1 to 3 following the same procedures as in Experimental Example 8. The obtained results are shown in Tables 4 and 5.

### Experimental Example 16

A laminated body was obtained following the same procedures as in Experimental Example 14 except that a first anchor coating agent primarily consisting of an acrylic resin and a second anchor coating agent primarily consisting of a vinylacetal resin were used, and only an overcoating agent primarily consisting of an acrylic resin was used as an overcoat layer.

The obtained laminated body was used to conduct evaluation tests 1 to 3 following the same procedures as in Experimental Example 8. The obtained results are shown in Tables 4 and 5.

### Experimental Example 17

A laminated body was obtained following the same procedures as in Experimental Example 8 except that a first anchor coating agent primarily consisting of urethane-based resin and a second anchor coating agent primarily consisting of an acrylic resin were used as anchor coat layers, and only an overcoating agent primarily consisting of a urethane-based resin was used as an overcoat layer.

The obtained laminated body was used to conduct evaluation tests 1 to 3 following the same procedures as in Experimental Example 8. The obtained results are shown in Tables 4 and 5.

**Table 4-1**

| | Construction of indicator Portion | Coloration | | Stability | | |
|---|---|---|---|---|---|---|
| | | In Atmosphere | In CO₂ | Light Resistance | Heat Resistance | Water Resistance |
| Experimental Example 8 | urethane-based anchor coating agent/vinylacetal-based anchor coating agent/ink for sensing carbon dioxide gas/vinylacetal-based overcoating agent/ urethane-based overcoating agent | Purple | Yellow | ○ | ○ | ○ |
| Experimental Example 9 | urethane-based anchor coating agent/vinylacetal-based anchor coating agent/ink for sensing carbon dioxide gas/urethane-based overcoating agent | Purple | Yellow | ○ | ○ | ○ |
| Experimental Example 10 | urethane-based anchor coating agent/vinylacetal-based anchor coating agent/ink for sensing carbon dioxide gas/vinylacetal-based overcoating agent | Purple | Yellow | ○ | ○ | Δ |

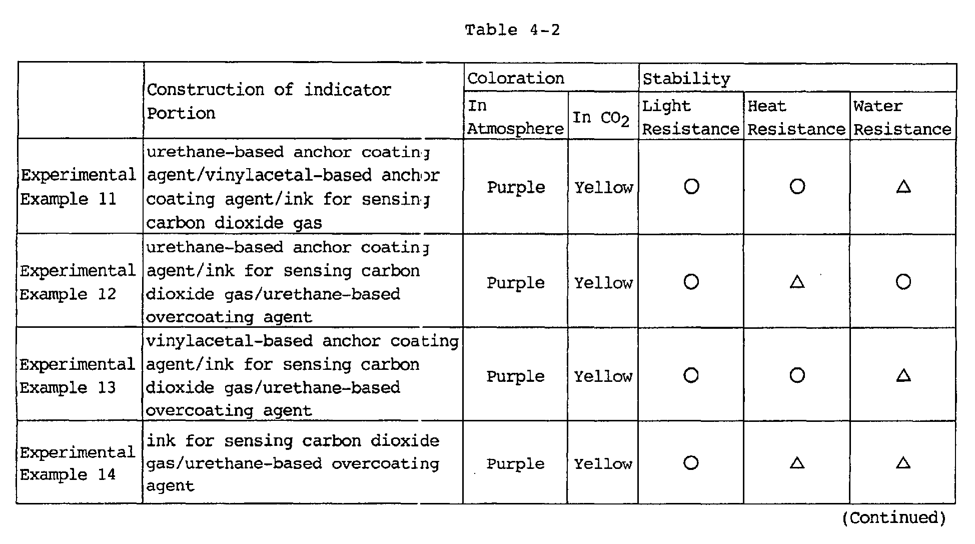

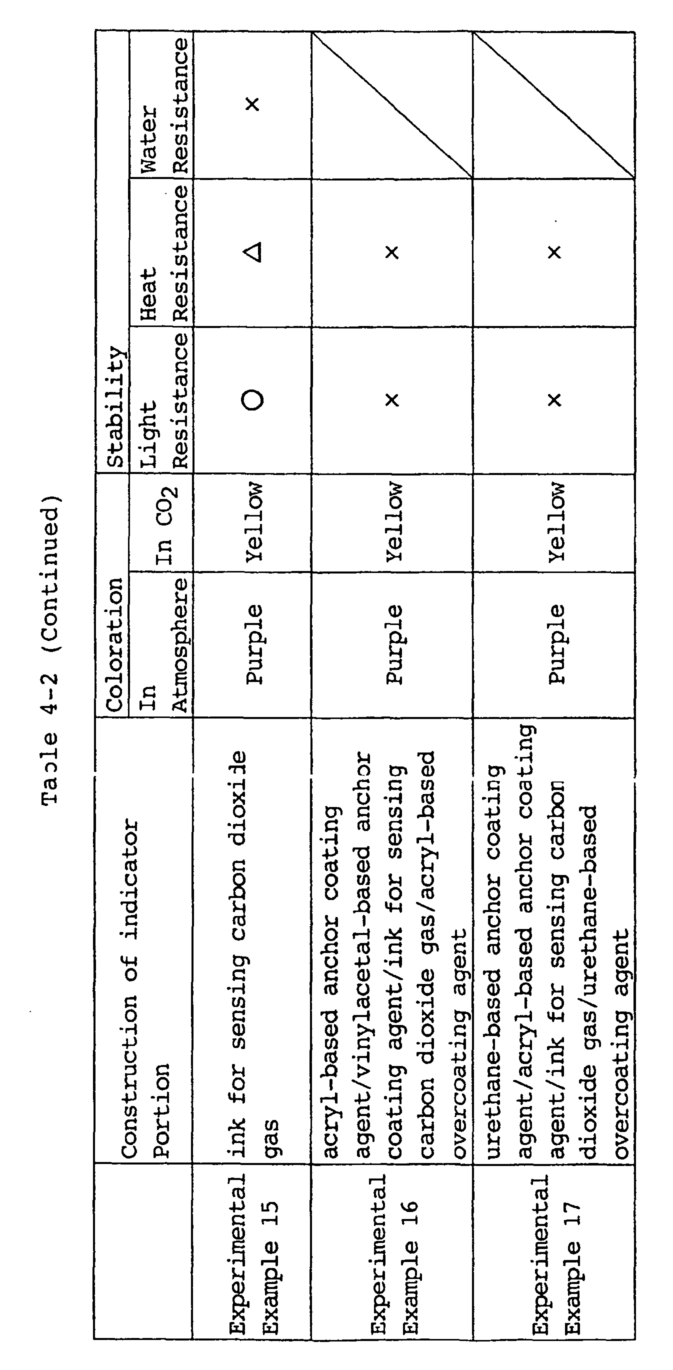

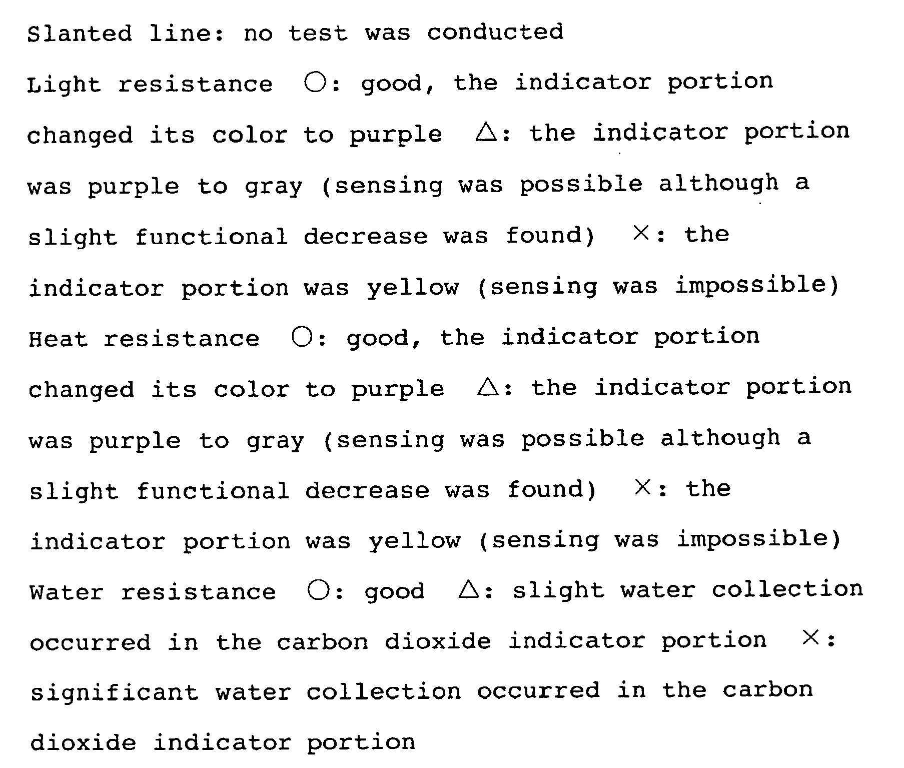

In each of Experimental Examples 8 to 15, the carbon dioxide indicator was purple in the atmosphere and yellow in carbon dioxide gas. Also, the light resistance, heat resistance, and water resistance were good or on a sensible level. In Experimental Example 16, water collected in the indicator portion to impair its external appearance. On the other hand, when an acrylic resin was used as an anchor coating agent and an overcoating agent as in Experimental Example 17, the indicator portion was purple in the atmosphere and yellow in carbon dioxide gas but had neither light resistance nor heat resistance and lacked stability.

**Table 5-1**

| | Construction of indicator Portion | External Appearance Of Indicator Portion |
|---|---|---|
| Experimental Example 8 | urethane-based anchor coating agent/vinylacetal-based anchor coating agent/ink for sensing carbon dioxide gas/vinylacetal-based overcoating agent/urethane-based overcoating agent | ○ |
| Experimental Example 9 | urethane-based anchor coating agent/vinylacetal-based anchor coating agent/ink for sensing carbon dioxide gas/urethane-based overcoating agent | ○ |
| Experimental Example 10 | urethane-based anchor coating agent/vinylacetal-based anchor coating agent/ink for sensing carbon dioxide gas/vinylacetal-based overcoating agent | ○ |
| Experimental Example 11 | urethane-based anchor coating agent/vinylacetal-based anchor coating agent/ink for sensing carbon dioxide gas | ○ |
| Experimental Example 12 | urethane-based anchor coating agent/ink for sensing carbon dioxide gas/urethane-based overcoating agent | ○ |

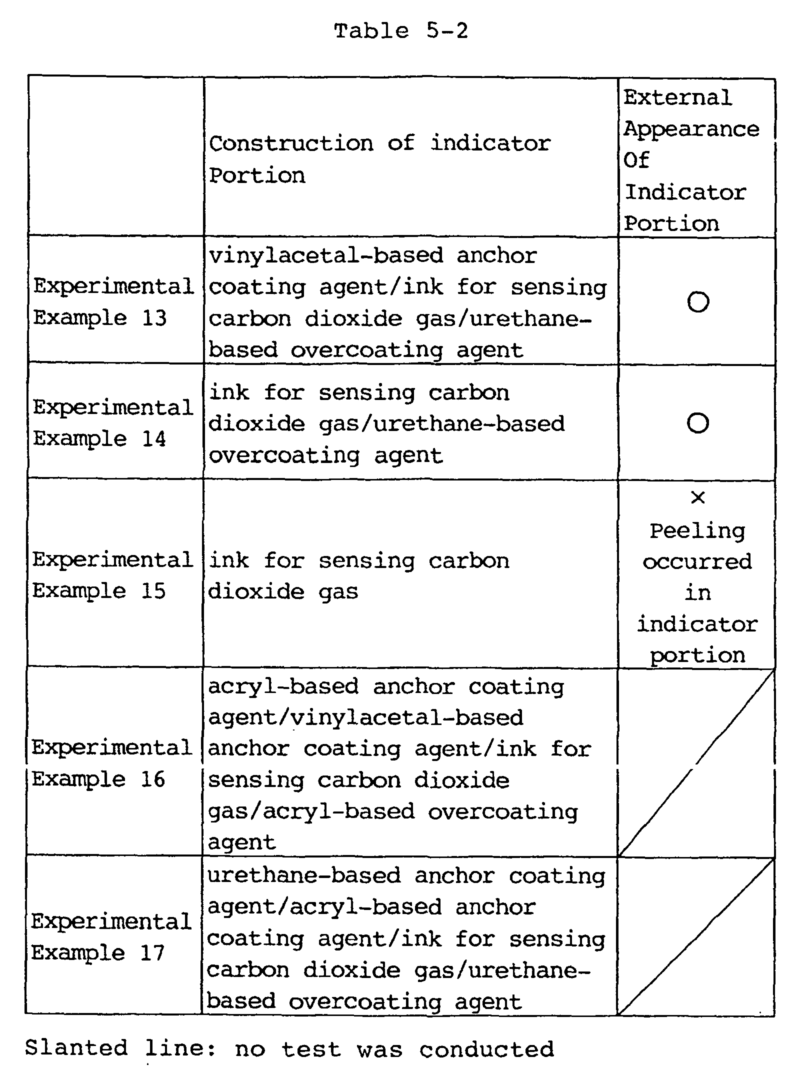

The results of evaluation test 1 reveal that when preferred overcoat layers and anchor coat layers were used, a carbon dioxide indicator and a package had excellent coloration. Evaluation test 2 shows that when preferred overcoat layers and anchor coat layers were used, a carbon dioxide indicator and its package were superior in light resistance, heat resistance, and water resistance. A vinylacetal resin improved the heat resistance, and a urethane resin improved the water resistance. Also, it is evident from evaluation test 3 that the strength of the indicating portion improved in practical use, so the indicating portion did not peel and did not worsen its external appearance. Industrial Applicability

The ink composition for sensing carbon dioxide gas of the present invention is applicable to a carbon dioxide indicator and a package, particularly a package sealing a carbon dioxide-containing replacement gas.

When the carbon dioxide indicator and package of the present invention are used, changes in the color of an indicating portion caused by the carbon dioxide concentration can be easily checked.

It is also possible to readily find a pinhole and poor seal of a gas-replaced package sealing a carbon dioxide-containing replacement gas.

## Claims

1. An ink composition for sensing carbon dioxide gas, containing a pH indicator changing its color as pH changes, binder, and solvent.

2. An ink composition for sensing carbon dioxide gas according to claim 1, further containing at least one of a water absorbent and alkaline substance.

3. An ink composition for sensing carbon dioxide gas according to one of claims 1 or 2, wherein said solvent consists of at least one of water and alcohol.

4. An ink composition for sensing carbon dioxide gas according to any one of claims 1 to 3, wherein said binder has the property of dissolving or dispersing in at least one of water and alcohol.

5. An ink composition for sensing carbon dioxide gas according to any one of claims 1 to 4, further containing glycerin.

6. An ink composition according to any of claims 1 to 5, the binder is selected from the group consisting of polyacrylic acid, polyvinyl alcohol, polyvinylbutyral, polyvinylacetal, vinyl polyacetate, polyurethane, and a vinyl acetate partial saponified product.

7. An ink composition according to any of claims 1 to 6, further comprising a water absorbent substance selected from the group consisting of starch, kaoline, synthetic silica, glass, fine crystal cellulose, ion exchanged cellulose, and aluminum silicate.

8. A composition according to any of claims 1 to 7, further comprising a coloring agent selected from the group consisting of Food Red No. 2 (Amaranth), Food Red No. 3 (Erythrosine), Food Red No. 40 (Alura red AC), Food Red No. 102 (New Coccine), Food Red No. 104 (Phloxine), Food Red No. 106 (Acid Red), a natural cochineal dye, Food Yellow No. 4 (Tartrazine), Food Yellow No. 5 (Sunset Yellow FCF), a natural safflower yellow dye, Food Blue No. 1 (Brilliant Blue FCF) and Food Blue No. 2 (Indigo Carmine).

9. A carbon dioxide indicator comprising a support and an indicating portion formed using the ink composition for sensing carbon dioxide gas according to any one of claims 1 to 8.

10. A carbon dioxide indicator according to claim 9, wherein said support comprises a carbon-dioxide-impermeable layer having a carbon dioxide permeability of not more than 50 (ml/m2·24 hr), and further comprises a carbon dioxide permeable layer formed on said indicating portion and having a carbon dioxide permeability of not less than 500 (ml/m²·24 hr).

11. A carbon dioxide indicator according to one of claims 9 or 10, further comprising at least one of an anchor coat layer formed between said support and said indicating portion, and an overcoat layer formed to cover said indicating portion.

12. A carbon dioxide indicator according to claim 11, wherein said anchor coat layer contains at least one of a urethane resin and vinylacetal resin.

13. A carbon dioxide indicator according to one of claims 11 or 12, wherein said overcoat layer contains at least one of a urethane resin and vinylacetal resin.

14. A carbon dioxide indicator according to any one of claims 9 to 13, **characterized in that** said support is a container for storing contents.

15. A carbon dioxide indicator according to any one of claims 9 to 13, **characterized in that** said support is a carbon dioxide impermeable outer package for packaging a container for storing contents.

16. A package **characterized in that** a carbon dioxide indicator according to any one of claims 9 to 15 is placed in an outer package sealing a gas which contains carbon dioxide gas.

17. A package according to claim 16, wherein said carbon dioxide indicator is placed between a container and a carbon dioxide impermeable outer package for packaging said container.

18. A package according to claim 16, wherein said outer package is applied as said support, and said indicating portion is formed on at least a portion of the inner surface of said outer package.

19. A package according to claim 16, further comprising at least one of an anchor coat layer formed between said support and said indicating portion, and an overcoat layer formed to cover said indicating portion.

20. A package according to claim 19, wherein said anchor coat layer contains at least one of a urethane resin and vinylacetal resin.

21. A package according to claim 19, wherein said overcoat layer contains at least one of a urethane resin and vinylacetal resin.

## Patentansprüche

1. Tintenzusammensetzung zum Fühlen von Kohlendioxidgas, welche einen pH-Indikator, der seine Farbe ändert, wenn sich der pH-Wert ändert, einen Binder und ein Lösungsmittel enthält.

2. Die Tintenzusammensetzung zum Fühlen von Kohlendioxidgas nach Anspruch 1, welche ferner mindestens ein Wasser absorbierendes Mittel und / oder eine alkalische Substanz enthält.

3. Die Tintenzusammensetzung zum Fühlen von Kohlendioxidgas nach einem der Ansprüche 1 oder 2, wobei das Lösungsmittel mindestens aus Wasser und / oder Alkohol besteht.

4. Die Tintenzusammensetzung zum Fühlen von Kohlendioxidgas nach einem der Ansprüche 1 bis 3, wobei der Binder die Eigenschaften des Auflösens oder Dispergierens in mindestens Wasser und / oder Alkohol aufweist.

5. Die Tintenzusammensetzung zum Fühlen von Kohlendioxidgas nach einem der Ansprüche 1 bis 4, welche ferner Glycerin enthält.

6. Die Tintenzusammensetzung nach einem der Ansprüche 1 bis 5, wobei der Binder aus der Gruppe ausgewählt wurde, die aus Polyacrylsäure, Polyvinylalkohol, Polyvinylbutyral, Polyvinylacetal, Polyvinylpolyacetat, Polyurethan und einem teilweise verseiften Produkt von Vinylacetat besteht.

7. Die Tintenzusammensetzung nach einem der Ansprüche 1 bis 6, welche ferner eine Wasser absorbierende Substanz umfasst, die aus der Gruppe ausgewählt wurde, die aus Stärke, Kaolin, synthetischem Siliciumoxid, Glas, feinkristalliner Cellulose, ionenausgetauschter Cellulose und Aluminiumsilicat besteht.

8. Die Zusammensetzung nach einem der Ansprüche 1 bis 7, welche ferner ein Farbgebungsmittel umfasst, das aus der Gruppe ausgewählt wurde die aus Food Red Nr. 2 (Amaranth), Food Red Nr. 3 (Erythrosin), Food Red Nr. 4 (Alura red AC), Food Red Nr. 102 (New Coccine), Food Red Nr. 104 (Phloxine), Food Red Nr. 106 (Säurerot), einem natürlichen Karminfarbstoff, Food Yellow Nr. 4 (Tartrazin), Food Yellow Nr. 5 (Sonnenaufganggelb FCF), einem natürlichen gelben Distelfarbstoff, Food Blue Nr. 1 (Brilliantblau FCF) und Food Blue Nr. 2 (Indigo Carmin) besteht.

9. Kohlendioxidindikator, welcher einen Träger und einen Anzeigeabschnitt umfasst, der unter Verwendung der Tintenzusammensetzung zum Fühlen von Kohlendioxidgas gemäß einem der Ansprüche 1 bis 8 gebildet wurde.

10. Der Kohlendioxidindikator nach Anspruch 9, wobei der Träger eine für Kohlendioxid impermeable Schicht mit einer Kohlendioxid-Permeabilität von nicht mehr als 50 (ml/m² × 24 Std.) umfasst, und ferner eine für Kohlendioxid permeable Schicht umfasst, die auf dem Anzeigeabschnitt gebildet wurde, und eine Kohlendioxidpermeabilität von nicht weniger als 500 (ml/m² × 24 Std.) umfasst.

11. Der Kohlendioxidindikator nach einem der Ansprüche 9 oder 10, welcher ferner mindestens entweder eine Verankerungsüberzugsschicht, die zwischen dem Träger und dem Anzeigeabschnitt gebildet wurde, und / oder eine Überzugsschicht, die zum Bedecken des Anzeigeabschnitts gebildet wurde, umfasst.

12. Der Kohlendioxidindikator nach Anspruch 11, wobei die Verankerungsüberzugsschicht mindestens entweder Urethanharz oder Vinylacetalharz enthält.

13. Der Kohlendioxidindikator nach einem der Ansprüche 11 oder 12, wobei die Überzugsschicht mindestens entweder ein Urethanharz und / oder Vinylacetalharz enthält.

14. Der Kohlendioxidindikator nach einem der Ansprüche 9 bis 13, **dadurch gekennzeichnet, dass** der Träger ein Behälter zum Aufbewahren von Inhalt ist.

15. Der Kohlendioxidindikator nach einem der Ansprüche 9 bis 13, **dadurch gekennzeichnet, dass** der Träger eine für Kohlendioxid impermeable äußere Verpackung zum Verpacken eines Behälters zum Aufbewahren von Inhalt ist.

16. Eine Verpackung, **dadurch gekennzeichnet, dass** ein Kohlendioxidindikator nach einem der Ansprüche 9 bis 15 in einer äußeren Verpackung platziert ist, welche ein Gas verschließt, das Kohlendioxidgas enthält.

17. Eine Verpackung nach Anspruch 16, wobei der Kohlendioxidindikator zwischen einem Behälter und einer für Kohlendioxid impermeablen äußeren Verpackung zum Verpacken des Behälters platziert ist.

18. Eine Verpackung nach Anspruch 16, wobei die äußere Verpackung als Träger angewendet wird und der Anzeigeabschnitt mindestens auf einem Abschnitt der inneren Oberfläche der äußeren Verpackung gebildet wurde.

19. Die Verpackung nach Anspruch 16, welche ferner mindestens eine Verankerungsüberzugsschicht, die zwischen dem Träger und dem Anzeigeabschnitt gebildet wurde, und / oder eine Überzugsschicht, die zum Bedecken des Anzeigeabschnitts gebildet wurde, umfasst.

20. Eine Verpackung nach Anspruch 19, wobei die Verankerungs-Überzugsschicht mindestens Urethanharz und / oder Vinylacetalharz enthält.

21. Die Verpackung nach Anspruch 19, wobei die Überzugsschicht mindestens Urethanharz und / oder Vinylacetalharz enthält.

## Revendications

1. Composition d'encre pour détecter le dioxyde de carbone gazeux, contenant un indicateur de pH changeant de couleur quand le pH change, un liant, et un solvant.

2. Composition d'encre pour détecter le dioxyde de carbone gazeux selon la revendication 1, contenant en outre au moins un d'un absorbant d'eau et d'une substance alcaline.

3. Composition d'encre pour détecter le dioxyde de carbone gazeux selon l'une des revendications 1 ou 2, dans laquelle ledit solvant consiste en au moins un de l'eau et d'un alcool.

4. Composition d'encre pour détecter le dioxyde de carbone gazeux selon l'une quelconque des revendications 1 à 3, dans laquelle ledit liant a la propriété de se dissoudre ou de se disperser dans au moins un de l'eau et d'un alcool.

5. Composition d'encre pour détecter le dioxyde de carbone gazeux selon l'une quelconque des revendications 1 à 4, contenant en outre de la glycérine.

6. Composition d'encre selon l'une quelconque des revendications 1 à 5, dans laquelle le liant est choisi dans le groupe constitué par l'acide polyacrylique, l'alcool polyvinylique, le polyvinylbutyral, le polyvinylacétal, le polyacétate de vinyle, le polyuréthane, et un produit saponifié partiellement par l'acétate de vinyle.

7. Composition d'encre selon l'une quelconque des revendications 1 à 6, comprenant en outre une substance absorbant l'eau choisie dans le groupe constitué par l'amidon, le kaolin, la silice synthétique, le verre, la cellulose cristalline fine, la cellulose ayant subi un échange d'ions, et le silicate d'aluminium.

8. Composition d'encre selon l'une quelconque des revendications 1 à 7, comprenant en outre un agent colorant choisi dans le groupe constitué par le rouge alimentaire No. 2 (amarante), le rouge alimentaire No. 3 (érythrosine), le rouge alimentaire No. 40 (rouge Alura AC), le rouge alimentaire No. 102 (nouvelle Coccine), le rouge alimentaire No. 104 (Phloxine), le rouge alimentaire No. 106 (rouge acide), un colorant cochenille naturelle, le jaune alimentaire No. 4 (tartrazine), le jaune alimentaire No. 5 (jaune Sunset FCF), un colorant jaune de safran naturel, le bleu alimentaire No. 1 (bleu brillant FCF), et le bleu alimentaire No. 2 (carmin indigo).

9. Indicateur de dioxyde de carbone comprenant un support et une partie d'indication formée en utilisant la composition d'encre pour détecter le dioxyde de carbone gazeux selon l'une quelconque des revendications 1 à 8.

10. Indicateur de dioxyde de carbone selon la revendication 9, dans lequel ledit support comprend une couche imperméable au dioxyde de carbone ayant une perméabilité au dioxyde de carbone non supérieure à 50 (ml/m²·24 h), et en outre comprend une couche perméable au dioxyde de carbone formée sur ladite partie d'indication et ayant une perméabilité au dioxyde de carbone non inférieure à 500 (ml/m²·24 h).

11. Indicateur de dioxyde de carbone selon l'une quelconque des revendications 9 ou 10, comprenant en outre au moins une d'une couche de revêtement d'ancrage formée entre ledit support et ladite partie d'indication, et une couche de revêtement supérieur formée pour recouvrir ladite partie d'indication.

12. Indicateur de dioxyde de carbone selon la revendication 11, dans lequel ladite couche de revêtement d'ancrage contient au moins un d'une résine uréthane et d'une résine vinylacétal.

13. Indicateur de dioxyde de carbone selon l'une quelconque des revendications 11 ou 12, dans lequel ladite couche de revêtement supérieur contient au moins une d'une résine uréthane et d'une résine vinylacétal.

14. Indicateur de dioxyde de carbone selon l'une quelconque des revendications 9 à 13, **caractérisé en ce que** ledit support est un conteneur pour stocker des contenus.

15. Indicateur de dioxyde de carbone selon l'une quelconque des revendications 9 à 13, **caractérisé en ce que** ledit support est un emballage externe imperméable au dioxyde de carbone pour emballer un conteneur pour stocker des contenus.

16. Emballage **caractérisé en ce qu'**un indicateur de dioxyde de carbone selon l'une quelconque des revendications 9 à 15 est placé dans un emballage externe enfermant un gaz qui contient du dioxyde de carbone gazeux.

17. Emballage selon la revendication 16, dans lequel ledit indicateur de dioxyde de carbone est placé entre un conteneur et un emballage externe imperméable au dioxyde de carbone pour emballer ledit conteneur.

18. Emballage selon la revendication 16, dans lequel ledit emballage externe est appliqué comme dit support, et ladite partie d'indication est formée sur au moins une partie de la surface interne dudit emballage externe.

19. Emballage selon la revendication 16, comprenant en outre au moins une d'une couche de revêtement d'ancrage formée entre ledit support et ladite partie d'indication, et une couche de revêtement supérieur formée pour recouvrir ladite partie d'indication.

20. Emballage selon la revendication 19, dans lequel ladite couche de revêtement d'ancrage contient au moins une d'une résine uréthane et d'une résine vinylacétal.

21. Emballage selon la revendication 19, dans lequel ladite couche de revêtement supérieur contient au moins une d'une résine uréthane et d'une résine vinylacétal.
